# EUROPÄISCHE PATENTANMELDUNG

(11) **EP 2 088 387 A2**
(43) Veröffentlichungstag der Anmeldung: **12.08.2009**
(21) Anmeldenummer: 09450031.1
(22) Anmeldetag: 11.02.2009
(51) Int. Cl.: F24J 2/52, H01L 31/042, F24J 2/46

(54) **Vorrichtung mit einem Solarmodul**

(30) Priorität: 11.02.2008 AT 2182008
(71) Anmelder: Astner, Adolf, 9853 Gmünd (AT)
(72) Erfinder: Astner, Adolf, 9853 Gmünd (AT)
(74) Vertreter: Sonn & Partner Patentanwälte

(57) **Zusammenfassung**

Die Erfindung betrifft eine Vorrichtung mit einem Solarmodul (2) zum Sammeln bzw. Umwandeln von Sonnenenergie, wobei das Solarmodul (2) an einem Aufnahmekörper (1) befestigt ist, der eine im montierten Zustand der Sonne zugewandte Außenschicht (4) und zumindest eine Innenschicht (6) aufweist, wobei die Innenschicht (6) eine geringere Dichte als die Außenschicht (4) aufweist und die Innenschicht (6) zumindest teilweise aus einem Blähton aufweisenden Leichtbeton besteht.

## Beschreibung

Die Erfindung betrifft eine Vorrichtung mit einem Solarmodul zum Sammeln bzw. Umwandeln von Sonnenenergie, wobei das Solarmodul an einem Aufnahmekörper befestigt ist, der eine im montierten Zustand der Vorrichtung der Sonne zugewandte Außenschicht und zumindest eine Innenschicht aufweist, wobei die Innenschicht eine geringere Dichte als die Außenschicht aufweist, sowie ein Verfahren zur Herstellung eines Aufnahmekörpers für die erfindungsgemäße Vorrichtung und einen Aufnahmekörper für die erfindungsgemäße Vorrichtung.

Aus dem Stand der Technik sind bereits verschiedene Solarkollektoren bekannt, die an einem Aufnahmekörper angebracht sind.

Unter Solarmodulen zum Sammeln bzw. Umwandeln von Sonnenenergie sind im Zusammenhang mit der vorliegenden Erfindung beliebige Sonnen- bzw. Solarkollektoren zu verstehen, über welche mittels der "eingefangenen" Sonnenenergie ein Übertragungsmedium beheizt wird. Ebenso umfasst der Begriff Solarmodul verschiedenste Photovoltaikelemente, über welche Sonnenenergie direkt in elektrische Energie umgewandelt wird.

Aus der DE 34 18 005 A ist bereits ein Solarkollektor bekannt, der einen Aufnahmekörper aus Beton aufweist. Dabei besteht der Aufnahmekörper grundsätzlich aus glasfaserverstärktem Beton, wobei auf jener von dem Solarkollektor abgewandten Seite dieser Betonschicht ein leichter Zellenbeton aufgebracht wird. Dieser Zellenbeton wird unter Einsatz eines Schaumbildners hergestellt, wobei die Schaumemulsion mit Sand, Portland-Zement und Wasser vermischt wird. Hierdurch wird ein Beton mit einer Dichte von ca. 0,609 g/cm³ erzielt.

Aus der DE 78 29 911 U1 ist ein weiterer Solarkollektor bekannt, bei welchem eine Abdeckung eines Gehäuses vorgesehen ist, die prismenförmig gefaltet ist, um einen optimalen Einfallswinkel der Sonneneinstrahlung zu ermöglichen. Das Gehäuse der Sonnenwärmeauffangfläche ist aus einem beliebigen korrosionsbeständigen Material hergestellt, wobei eine Isolierung des Gehäuses vorgesehen ist.

Aus dem Stand der Technik sind zudem Solarkollektoren mit einschichtig ausgebildeten Aufnahmekörpern bekannt; diese grundsätzlich andersartigen Aufnahmekörper weisen demnach keinen Schichtaufbau mit einer der Sonne zugewandten Außenschicht und zumindest einer Innenschicht auf.

So ist aus der DE 101 02 918 A1 eine bifunktionale Solaranlage bekannt, welche sowohl eine Photovoltaik-Anlage als auch eine solarthermische Anlage in sich vereint. Die photovoltaisch und solarthermisch wirksamen Paneele bilden dabei ein Schichtsystem, wobei innenseitig eine wärmedämmende Trägerplatte als Grundschicht vorgesehen ist. Als Material für diese einschichtig ausgebildete Trägerplatte ist einerseits Polystyrol-Hartschaum und andererseits eine Putzträgerplatte aus mineralisch gebundenem Blähton geoffenbart.

Aus der JP 58-12960A ist ein weiterer Sonnenkollektor bekannt, bei welchem ein Solarmodul in einem Hohlraum eines einschichtig ausgeführten Aufnahmekörpers aus Beton vorgesehen ist.

Auch aus der DE 297 20 377 U1 ist bekannt, ein einschichtig ausgebildetes Gehäuse für einen Solarabsorber vorzusehen, wobei das Gehäuse zur Wärmedämmung aus einem Material geringer Wärmeleitfähigkeit, insbesondere aus einem mineralischen Baustoff wie Porenbeton oder aus einem Schaumstoff wie Polyurethan, beschaffen ist.

Schließlich sind aus der DE 87 01 535 U1 noch Isolierwannen für Sonnenkollektoren bekannt. Diese einschichtig ausgeführten Isolierwannen sind aus Mischungen beschaffen, welche anorganische Mikrohohlkörper wie Glashohlkörper oder Blähtonteilchen enthalten.

Nachteilig an einer derartigen einschichtigen Ausführung des Aufnahmekörpers ist eine vergleichsweise geringe Isolierwirkung nach innen bzw. eine mangelhafte Widerstandsfähigkeit des Aufnahmekörpers nach außen.

Ziel der vorliegenden Erfindung ist es, eine Vorrichtung der eingangs angeführten Art zu schaffen, bei welcher eine vergleichsweise gute Isolierungswirkung durch die Vorrichtung erreicht wird und zugleich Sonnenenergie gesammelt bzw. in elektrische Energie umgewandelt wird. Demzufolge soll eine vorteilhafte Kombination von Energieeinsparung und Energieaufnahme bzw. -umwandlung erzielt werden.

Dies wird erfindungsgemäß dadurch erzielt, dass die Innenschicht zumindest teilweise aus einem Blähton aufweisenden Leichtbeton besteht. Durch das Vorsehen einer Innenschicht, welche Blähton aufweist, wird eine vergleichsweise gute Isolierung durch den hohen Luftanteil in den Zwischenräumen zwischen benachbarten Körnern des Blähtons erzielt, so dass gegenüber vorbekannten Leichtbetonschichten eine verbesserte Isolierwirkung des Aufnahmekörpers erzielt wird. Vorteilhafterweise kann durch das Vorsehen des Blähtons in der Innenschicht eine Dichte ≤ 350 kg/m³ der Innenschicht erzielt werden.

Tests haben gezeigt, dass es zwecks einer guten Isolierfähigkeit der Innenschicht von Vorteil ist, wenn kugelförmige Körner des Blähtons der Innenschicht einen Durchmesser zwischen 4 und 8 mm aufweisen.

Zur Erzielung einer wetterfesten, widerstandsfähigen Außenschicht ist es günstig, wenn die Außenschicht aus Zementstein besteht. Weiters eignet sich die Außenschicht aufgrund ihrer vergleichsweise hohen Dichte somit zur Aufnahme einer das Solarmodul abdeckenden Platte. Hierbei ist es hinsichtlich einer einfachen, zuverlässigen Aufnahme der Platten günstig, wenn die Außenschicht eine Falz zur Aufnahme einer Abdeckung aufweist. Alternativ kann die Platte auch mittels einer Klemmschiene oder dergleichen am Aufnahmekörper befestigt werden, so dass die Außenschicht im montierten Zustand von einer Abdeckplatte bzw. der zur Befestigung der Abdeckplatte vorgesehenen Klemmschiene bedeckt wird. In diesem Fall kann eine Falz zur Aufnahme entfallen, und es ist ausreichend, wenn lediglich ein zweischichtiger Aufbau vorgesehen ist. Hiebei kann die Außenschicht aus Blähton aufweisendem Leichtbeton bestehen, dessen Körner einen Durchmesser zwischen 1 und 4 mm, insbesondere von im Wesentlichen 3 mm, aufweisen.

Ausgehend von der im befestigten Zustand frei zugänglichen Außenschicht, welche eine vergleichsweise harte Wetterseite darstellt, die Wetter- und Umweltangriffen ausgesetzt ist, ist es vorteilhaft, wenn zwischen der Innenschicht und der Außenschicht eine Zwischenschicht vorgesehen ist, die eine Dichte zwischen jener der Innenschicht und der Außenschicht aufweist. Eine derartige Zwischenschicht stellt einen zweckmäßigen Übergang zwischen der widerstandsfähigen Außenschicht und der als Wärmedämmung vorgesehenen Innenschicht dar.

Für die Ausbildung eines kompakten Aufnahmekörpers, bei welchem sich die einzelnen Schichten auch nicht aufgrund mechanischer oder thermischer Einflüsse voneinander lösen, ist es günstig, wenn die Zwischenschicht aus Leichtbeton besteht, wobei der Leichtbeton Blähton aufweist, dessen Körner einen Durchmesser zwischen 1 und 4 mm, insbesondere von im Wesentlichen 3 mm, aufweisen. Die Außen-, Zwischen- und Innenschicht, welche jeweils aus Beton unterschiedlicher Dichte bestehen, können somit vorteilhafterweise im noch feuchten Zustand aneinandergefügt werden, so dass sich eine einstückige, mehrschichtige Ausbildung des Aufnahmekörpers ergibt, der einerseits nach außen widerstandsfähig, andererseits nach innen wärmedämmend ausgebildet ist.

Um weiters eine Gewichtsreduktion des Aufnahmekörpers und zugleich eine Verbesserung der Isoliereigenschaften zu erzielen, ist es vorteilhaft, wenn der Aufnahmekörper rahmenförmig ausgebildet ist, wobei in dem rahmenförmigen Aufnahmekörper eine Füllung, insbesondere aus Kunststoff-Hartschaumplatten, aufgenommen ist. Somit ergibt sich, dass der Aufnahmekörper als dreidimensionale Sandwichkonstruktion ausgebildet ist, d.h. sowohl in der Tiefe als auch in der senkrecht hierzu stehenden Ebene weist der Aufnahmekörper unterschiedliche Schichten unterschiedlicher Dichte auf.

Um eine einfache Befestigung des rahmenförmigen Aufnahmekörpers an einem Bauwerk oder dergl. zu ermöglichen, ist es von Vorteil, wenn der rahmenförmige Aufnahmekörper in seinen Eckbereichen im Wesentlichen dreieckige Befestigungsabschnitte aufweist.

Sofern der Aufnahmekörper als tragendes Element ausgebildet ist, kann der Aufnahmekörper nicht nur an der Fassade eines Bauwerks, an einem Gestell oder dergl. befestigt werden, sondern kann als integriertes tragendes Element eines Bauwerks (z.B. einer Hauswand oder einer Lärmschutzkonstruktion) eingesetzt werden. Unter "montierter Zustand" ist somit sowohl die Befestigung an einem tragenden Element als auch die Errichtung eines tragenden Elements durch den Aufnahmekörper selbst zu verstehen. Um die erforderliche Tragfestigkeit zu erzielen, ist es vorteilhaft, wenn die Dicke der Innenschicht zumindest ca. 25 cm beträgt. Die Vorrichtung ersetzt somit zumindest teilweise eine Wandkonstruktion und dient zugleich als Wärmeschutz als auch zur Gewinnung von Sonnenenergie.

Das Verfahren der eingangs angeführten Art ist dadurch gekennzeichnet, dass die Außen- und Innenschicht sowie gegebenenfalls die Zwischenschicht im nicht ausgehärteten Zustand miteinander verbunden werden. Durch die Verbindung der einzelnen Schichten im noch nicht ausgehärteten Zustand bindet der Zementleim der einzelnen Betonschichten gleichmäßig ab, so dass eine einstückige, kompakte Ausgestaltung des Aufnahmekörpers gewährleistet ist. Bei einer derartigen Verbindung der Schichten untereinander sind die Grenzebenen zwischen den Schichten nicht exakt hergestellt, wobei der Übergangsbereich zwischen den Schichten im Schnitt um ca. 2 mm abweichen kann. Hierdurch wird eine verbesserte Statik des Aufnahmekörpers erzielt und vorteilhafterweise eine spätere Trennung der Schichten durch mechanische oder thermische Einflüsse verhindert.

Die Erfindung wird nachstehend anhand von einem in den Zeichnungen dargestellten bevorzugten Ausführungsbeispiel, auf das sie jedoch nicht beschränkt sein soll, noch näher erläutert. Im Einzelnen zeigen in der Zeichnung:
Fig. 1 eine Draufsicht auf einen Aufnahmekörper für eine erfindungsgemäße Vorrichtung;
Fig. 2 einen Schnitt gemäß der Linie II-II in Fig. 1;
Fig. 3 einen Schnitt gemäß der Linie III-III in Fig. 1;
Fig. 4 im Detail eine Schnittansicht eines Aufnahmekörpers mit einer Falz zur Aufnahme einer Abdeckplatte;
Fig. 5 eine Schnittansicht von Aufnahmekörpern im Bereich der Befestigung zweier Abdeckplatten mittels einer Klemmleiste;
Fig. 6 schematisch eine Ansicht einer erfindungsgemäßen Vorrichtung mit einem Aufnahmekörper gemäß den Fig. 1 bis 5 und einem mit einem Heizmedium gefüllten Wärmeübertragungsrohr;
Fig. 7 einen Schnitt gemäß der Linie VII-VII in Fig. 6; und
Fig. 8 schematisch einen Schnitt einer Wärmeübertragungsplatte.

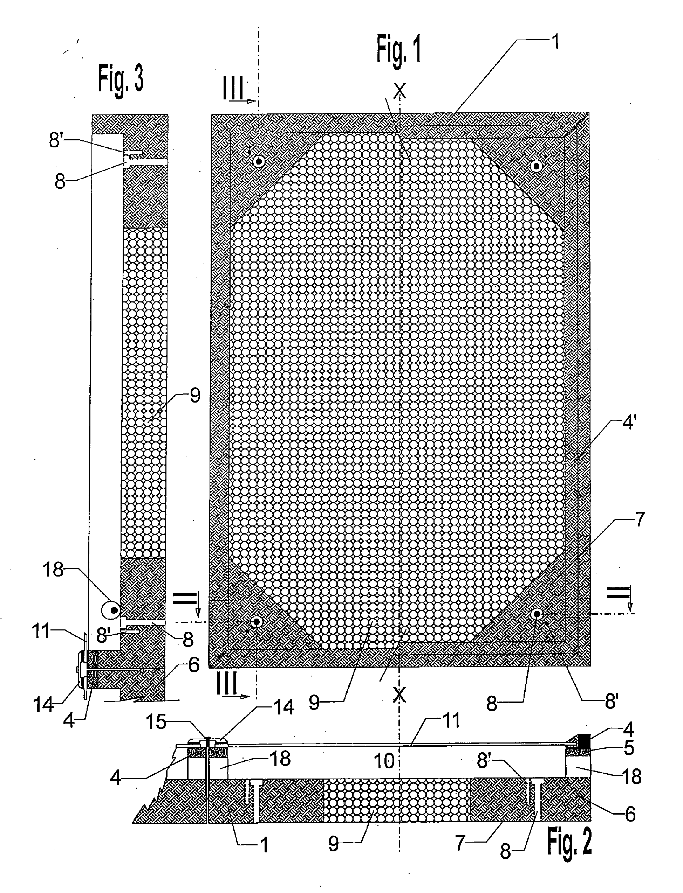

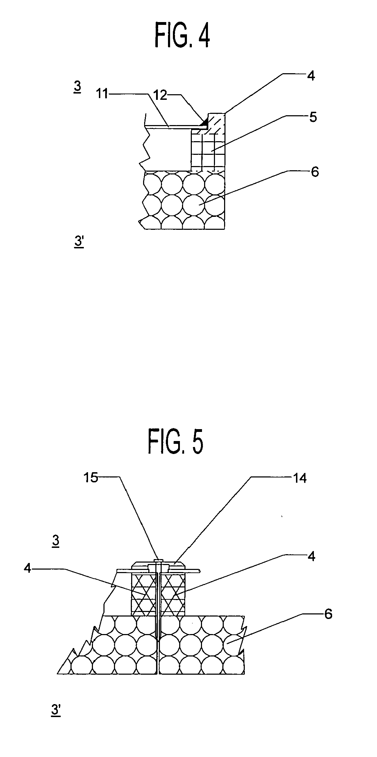

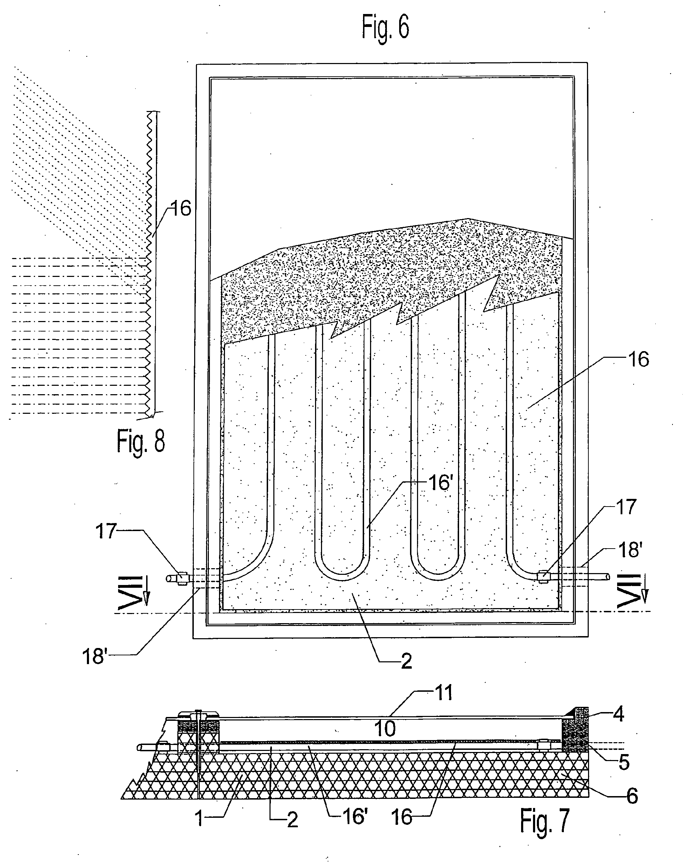

In den Fig. 1 bis 3 ist ein Aufnahmekörper 1 für die Aufnahme verschiedenster Solarmodule 2 (vgl. Fig. 6 und 7), insbesondere von Solarkollektoren bzw. Photovoltaikelementen, gezeigt. Der Aufnahmekörper 1 weist hierbei ein rahmenförmiges Betonelement auf, welches sich, wie insbesondere in Fig. 2 und Fig. 4 ersichtlich, aus zumindest zwei Schichten zusammensetzt.

Bei einem dreischichtigen Aufbau besteht eine oberste, eine im befestigten Zustand des Aufnahmekörpers 1 einer Außenseite 3 zugewandte Außenschicht 4 im Wesentlichen aus widerstandsfähigem Zementstein. Der Zementstein kann hierbei Mikroporen aufweisen, die durch ein Porenmittel erzielt werden, wobei das Luftporenmittel ca. 0,2 bis 0,7% vom Zementgewicht aufweist. Die Höhe bzw. Dicke dieser Außen- bzw. Wetterschicht 4 beträgt ca. 2 cm.

An diese Außenschicht 4 schließt zur Innenseite 3' hin eine Zwischenschicht 5 an, die eine Höhe bzw. Dicke von ca. 5 cm aufweist. Die Zwischenschicht 5 ist bereits als Isolierschicht ausgebildet, wobei sie aus Zementleim und Blähton mit einer Körnung von 3 mm besteht. Die wesentliche Funktion der Zwischenschicht 5 ist, einen Übergang zwischen der widerstandsfähigen Außenschicht 4 und einer an die Zwischenschicht 5 anschließenden Innenschicht 6 zu bilden. Die isolierende Innenschicht 6 besteht aus Zementleim und Blähton mit einer Körnung von ca. 4 bis 8 mm, so dass durch den hohen Anteil der Zwischenräume zwischen benachbarten Körnern des Blähtons eine gute Isolierwirkung der wärmedämmenden Innenschicht 6 erzielt wird. Die Innenschicht 6 weist hierbei eine Dichte von ≤ 350 kg/m³ auf, so dass eine gute Isolierwirkung erzielt wird. Vorteilhafterweise weist die Innenschicht 6 eine größere Dicke als die Zwischen- und/oder Außenschicht 5, 4 auf, bevorzugt ca. 7 cm.

Wie insbesondere in den Fig. 1 bis 3 ersichtlich ist der mehrschichtige Aufnahmekörper 1 aus Beton im Wesentlichen rahmenförmig ausgebildet, wobei in den Eckbereichen des Rahmens jeweils ein dreieckiger Befestigungsabschnitt 7 vorgesehen ist. Die Befestigungsabschnitte 7 weisen jeweils ein Durchgangsloch 8 zur Aufnahme einer Befestigungsschraube auf, so dass der Aufnahmekörper 1 auf einfache Weise an einem Bauwerk angeschraubt werden kann. Ferner sind Sacklöcher 8' zur Befestigung der Solarmodule 2 vorgesehen.

Im Inneren des rahmenförmigen Aufnahmekörpers 1 ist eine wärmedämmende Füllung 9 vorgesehen. Vorzugsweise besteht diese wärmedämmende Füllung 9 aus Hartschaumplatten aus synthetischen Dämmstoffen wie beispielsweise Polystyrol und/oder Polyurethan. Selbstverständlich können jedoch auch anorganische Dämmstoffe wie Mineralwolle oder Mineralschaum, natürliche Dämmstoffe wie Holzfaser, Kork, Hanf, Schilf oder dergl. eingesetzt werden. Selbstverständlich kann die Füllung auch - wie die Innenschicht 6 - aus wärmedämmendem Leichtbeton bestehen.

Wie insbesondere in Fig. 2 ersichtlich ergibt sich durch die erhabene randseitige Ausbildung des Aufnahmekörpers 1 eine im Wesentlichen wannenförmige Gestalt des Aufnahmekörpers 1, wobei in der wannenförmigen Aufnahme zwischen den Randleisten aus der Zwischen- bzw. Außenschicht 4, 5 ein Hohlraum 10 zur Aufnahme der Solarmodule 2 ausgebildet ist. Der Hohlraum 10 wird nach Aufnahme der Solarmodule 2 über eine Abdeck- bzw. Sicherheitsplatte 11 verschlossen. Die Abdeckplatte 11, welche vorzugsweise aus einem Sicherheitsglas besteht, ist in den Außenrändern in eine Falz 4' der Außenschicht 4 eingesetzt und wird mit Hilfe von Dichtungen 12 aus Gummi, Silikon oder dergl. zu der Außenschicht 4 hin abgedichtet.

Wie insbesondere in Fig. 5 ersichtlich kann der Aufnahmekörper zweischichtig ausgebildet sein und die Abdeckplatten 11 im Übergangsbereich zu einem benachbarten Aufnahmekörper 1 mit Hilfe einer Klemmschiene 14 unter Zwischenlage von Dichtungen, bevorzugt aus bis 200°C hitzebeständigem Gummi oder dergl., mit Hilfe einer Befestigungsschraube 15 klemmend befestigt werden. Hierbei weist der Aufnahmekörper 1 im Bereich eines als Befestigungsleiste ausgebildeten Randbereichs keine Falz auf, sondern die beiden über eine gemeinsame Klemmschiene 14 befestigten Abdeckplatten 11 liegen auf einer planen Oberfläche des Aufnahmekörpers 1 auf. In diesem randseitigen Bereich ist der Aufnahmekörper 2 zweischichtig ausgebildet, wobei als Außenschicht 4 das selbe Material wie für die Zwischenschicht 5 bei dem vorstehend beschriebenen dreischichtigen Aufbau vorgesehen ist.

Selbstverständlich können anstelle von Sicherheitsglas auch herkömmliches Schutzglas, Kunststoffplatten oder Folien, Plexiglas oder dergl. für die Abdeckung verwendet werden.

In den Fig. 6 bis 8 ist insbesondere ein Solarmodul 2 in Form eines Kupferblechs 16 mit einer Dicke von ca. 0,3 bis 0,5 mm gezeigt, auf welchem ein Kupferrohr 16' mit einem Durchmesser von ca. 10 mm aufgelötet ist. Das Kupferrohr 16' kann hiebei auf der Ober- oder Unterseite des Kupferblechs 16 angebracht werden. Nach Auflötung und Reinigung werden das Kupferblech 16 sowie die Kupferrohre 16' mit schwarzem Solarlack bestrichen. Zur Energieübertragung wird in dem Kupferrohr 16' ein Wärmeübertragungsmedium, vorzugsweise ein Wasser-Propylenglykol-Gemisch, geführt.

Das Kupferblech 16 kann hierbei, wie insbesondere in Fig. 8 ersichtlich, eine spezielle mikrogeprägte bzw. mikrogefräste Oberflächenstruktur von im Wesentlichen um 45° zueinander abweichenden Oberflächenkanten aufweisen, um den Wirkungsgrad des Solarmoduls 2 zu verbessern. Durch die spezielle Oberflächenstruktur erhöht sich die absorbierende Oberfläche um ca. 40%, d.h. dass 1 m² Absorberfläche eine 1,40 m² große Energieaufnahmefläche aufweist. Das Solarmodul 2 wird sodann in dem Aufnahmekörper 1 über die Abdeckplatte 11 vor Umgebungseinflüssen geschützt.

Selbstverständlich kann anstelle des in den Fig. 6 und 7 gezeigten Solarmoduls auch ein andersartiges Solarmodul, sowie eine andere Führung der Rohrschleife, z.B. eine harfenförmige Führung oder auch Photovoltaikpaneele oder dergl., vorgesehen sein.

Um einen Flüssigkeitsanschluss eines benachbarten Aufnahmekörpers 1 an das Kupferrohr 16' des gezeigten Aufnahmekörpers 1 zu erzielen, können Schneidringkupplungen 17 vorgesehen sein, um einen einfachen Anschluss an das benachbarte Rohr 16' zu ermöglichen. Alternativ können selbstverständlich auch Lötverbindungen vorgesehen sein. Um einen einfachen Durchtritt des Rohrs 16' durch die randseitigen Leisten des Aufnahmekörpers 1 zu erzielen, sind Durchgangsöffnungen 18' vorgesehen.

Die Absorberfläche eines Aufnahmekörpers 1 ist vorzugsweise ca. 0,5 m² groß, wobei die Außenlänge eines Aufnahmekörpers 1 vorzugsweise ca. 90 cm und die Breite ca. 60 cm beträgt. Somit können die Aufnahmekörper 1 auf einfache Weise in einem PKW zum Einbauort transportiert werden und vor Ort auf einfache Weise die fertige Vorrichtung in drei Montageschritten hergestellt werden. Zunächst werden die Aufnahmekörper 1 als Isolier- und Trägerelemente mittels Dübel und Schrauben oder jedoch über eine Klebeverbindung an einem Bauwerk befestigt. Anschließend werden ein Kupferblech 16 sowie Kupferrohre 16' oder andere wärmeleitfähige Materialen bzw. Photovoltaikpaneele an dem Aufnahmekörper 1 befestigt, und abschließend wird eine Abdeckplatte 11 an dem Aufnahmekörper 1 befestigt. Somit ergibt sich eine besonders einfache Herstellung der Vorrichtung vor Ort.

Wesentlich ist jedoch lediglich, dass aufgrund des mehrschichtigen Aufbaus des Aufnahmekörpers eine vergleichsweise hohe Isolierwirkung erzielt wird. Zudem ist der Aufnahmekörper atmungsaktiv, so dass eine Fäulnisbildung im Übergangsbereich zwischen einer Fassade und dem Aufnahmekörper vermieden wird.

## Patentansprüche

1. Vorrichtung mit einem Solarmodul (2) zum Sammeln bzw. Umwandeln von Sonnenenergie, wobei das Solarmodul (2) an einem Aufnahmekörper (1) befestigt ist, der eine im montierten Zustand der Sonne zugewandte Außenschicht (4) und zumindest eine Innenschicht (6) aufweist, wobei die Innenschicht (6) eine geringere Dichte als die Außenschicht (4) aufweist, **dadurch gekennzeichnet, dass** die Innenschicht (6) zumindest teilweise aus einem Blähton aufweisenden Leichtbeton besteht.

2. Vorrichtung nach Anspruch 1, **dadurch gekennzeichnet, dass** die Innenschicht (6) eine Dichte ≤ 350 kg/m³ aufweist.

3. Vorrichtung nach Anspruch 1 oder 2, **dadurch gekennzeichnet, dass** kugelförmige Körner des Blähtons der Innenschicht (6) einen Durchmesser zwischen 4 und 8 mm aufweisen.

4. Vorrichtung nach einem der Ansprüche 1 bis 3, **dadurch gekennzeichnet, dass** die Außenschicht (4) aus Zementstein besteht.

5. Vorrichtung nach einem der Ansprüche 1 bis 4, **dadurch gekennzeichnet, dass** die Außenschicht (4) eine Falz (4') zur Aufnahme einer Abdeckung (11) aufweist.

6. Vorrichtung nach Anspruch 1 bis 3, **dadurch gekennzeichnet, dass** die Außenschicht (4) aus Blähton aufweisendem Leichtbeton besteht, dessen Körner einen Durchmesser zwischen 1 und 4 mm, insbesondere von im Wesentlichen 3 mm, aufweisen.

7. Vorrichtung nach einem der Ansprüche 1 bis 5, **dadurch gekennzeichnet, dass** zwischen der Innenschicht (6) und der Außenschicht (4) eine Zwischenschicht (5) vorgesehen ist, die eine Dichte zwischen jener der Innenschicht (6) und der Außenschicht (4) aufweist.

8. Vorrichtung nach Anspruch 7, **dadurch gekennzeichnet, dass** die Zwischenschicht (5) aus Leichtbeton besteht, wobei der Leichtbeton Blähton aufweist, dessen Körner einen Durchmesser zwischen 1 und 4 mm, insbesondere von im Wesentlichen 3 mm, aufweisen.

9. Vorrichtung nach einem der Ansprüche 1 bis 8, **dadurch gekennzeichnet, dass** der Aufnahmekörper (1) rahmenförmig ausgebildet ist, wobei in dem rahmenförmigen Aufnahmekörper (1) eine Füllung (9), insbesondere aus Kunststoff-Hartschaumplatten, aufgenommen ist.

10. Vorrichtung nach Anspruch 9, **dadurch gekennzeichnet, dass** der rahmenförmige Aufnahmekörper (1) in seinen Eckbereichen im Wesentlichen dreieckige Befestigungsabschnitte (7) aufweist.

11. Vorrichtung nach einem der Ansprüche 1 bis 10, **dadurch gekennzeichnet, dass** der Aufnahmekörper (1) als tragendes Element ausgebildet ist.

12. Verfahren zur Herstellung eines Aufnahmekörpers (1) für eine Vorrichtung nach einem der Ansprüche 1 bis 11, **dadurch gekennzeichnet, dass** die Außen- und Innenschicht (4, 6) sowie gegebenenfalls die Zwischenschicht (5) im nicht ausgehärteten Zustand miteinander verbunden werden.

13. Aufnahmekörper (1) für eine Vorrichtung nach einem der Ansprüche 1 bis 11.
